# EUROPEAN PATENT APPLICATION

(11) **EP 3 001 289 A1**
(43) Date of publication of application: **30.03.2016**
(21) Application number: 13885025.0
(22) Date of filing: 23.05.2013
(51) Int. Cl.: G06F 3/0346, G06F 3/048, B60K 35/00, G01C 21/36

(54) **DISPLAY CONTROLLER**

(71) Applicant: Pioneer Corporation, Kawasaki-shi, Kanagawa 212-0031 (JP)
(72) Inventor: KURAHASHI, Makoto, Kawasaki-shi Kanagawa 212-0031 (JP); GOTODA, Akira, Kawasaki-shi Kanagawa 212-0031 (JP); ISHIKAWA, Yugo, Kawasaki-shi Kanagawa 212-0031 (JP)
(74) Representative: Viering, Jentschura & Partner mbB Patent- und Rechtsanwälte
(86) International application number: PCT/JP2013/064395
(87) International publication number: WO 2014/188565

(57) **Abstract**

A display control apparatus configured to control a display state of display objects on a display screen, is provided with: a detecting device configured to detect a trigger operation of a user and a gaze area of the user on the display screen, on the basis of an imaging result of an imaging device that images the user; a determining device configured to determine specified display objects corresponding to the detected trigger operation or the detected gaze area from among a plurality of display objects displayed on the display screen in a first display state; and a controlling device configured to control the display state to be a second display state in which the display state of the determined specified display objects is different from that in the first display state if the trigger operation is detected in the first display state

## Description

### Technical Field

The present invention relates to a display control apparatus that can be applied, for example, to an in-vehicle information display apparatus or the like.

### Background Art

In this type of technical field, there is proposed a virtual image display apparatus configured to superimpose and display a virtual image on a scene at the front of a vehicle (refer to Patent Literature 1).

The virtual image display apparatus disclosed in the Patent Literature 1 is provided with: a viewpoint detection camera configured to photograph a driver's eyes; and a gesture detection camera configured to photograph the driver's hand. If the driver performs an operation of pointing a displayed virtual image with his or her fingertip, image recognition processing is performed on images photographed by the viewpoint detection camera and the gesture detection camera. Then, positions of the eyes and fingertip of the driver are detected, and the driver's line of sight is specified. The display of a gaze virtual image on the specified line of sight is controlled on the basis of a display control command. In other words, according to the virtual image display apparatus disclosed in the Patent Literature 1, an object in the scene at the front of the vehicle can be specified by pointing the object while watching the object, which is to be an execution target of the display control command. It is therefore considered that a desired object can be easily specified without complicated inputs, and that a command regarding the specified object can be made.

The Patent Literature 1 also discloses an aspect in which the content of the display control command is specified on the basis of the operation of an operated unit placed on a steering wheel if the virtual image display apparatus is mounted on a vehicle. The Patent Literature 1 also discloses an aspect in which a preset area is irradiated with infrared laser light to recognize the movement of an operator's hand or fingers as the display control command. The Patent Literature 1 exemplifies, as display control according to the display control command, erasure of alarm display, movement of the alarm display, enlargement of the alarm display, and the like. There is also described an example in which a name of a building is superimposed and displayed on a scene at the front of the vehicle, if the driver moves his or her hand in a direction of the building, performs the operation of pointing the building with his or her fingertip, and then says "what is this?".

On the other hand, Patent Literature 2 discloses a gesture recognition apparatus configured to perform interaction control that reflects a user's intention.

On the gesture recognition apparatus, for example, a nodding operation is detected by a face direction detection unit in a user's instruction waiting state. If a user's line of sight detected by a line-of-sight detection unit during the nodding operation is directed to selection candidates, it is considered that the user intends to select the selection candidates, and a process in which the selection candidates are considered to be selected is performed. Alternatively, on the gesture recognition apparatus, the user's line of sight is detected by the line-of-sight detecting unit in the user's instruction waiting state. If a predetermined gesture is recognized while the line of sight is directed to the selection candidates, a predetermined process is performed on the basis of a recognition result of a gesture recognizing device.

The Patent Literature 2 also discloses a technical idea in which the detected line of sight is considered to be an arbitrary selection candidate in the case of a gaze state in which the detected line of sight is fixed for a predetermined time.

On the other hand, Patent Literature 3 describes that when a computer apparatus is controlled on the basis of eye tracking or line-of-sight tracking, a signal indicating a particular gaze pattern is generated on the basis of a dynamic change in the line of sight. The Patent Literature 3 also describes that a button, a switch, an audio signal, an input element motion pattern, a gesture pattern, a facial expression, and an EEG signal can be used as an auxiliary input signal.

### Citation List

### Patent Literature

Patent Literature 1: Japanese Patent Application Laid Open No. 2005-138755
Patent Literature 2: Japanese Patent Application Laid Open No. 2000-163196
Patent Literature 3: Japanese Translation of PCT International Application Publication No. 2008-502990

### Summary of Invention

### Technical Problem

The Patent Literature 1 describes the point that the user's gesture is used as a display object selection operation.

In practice, however, it is extremely hard to accurately specify the content of the gesture that can be freely performed by the user without restriction in a limited space, simply by using the photographing result by the cameras and the image recognition processing or the like.

It is therefore hard to accurately specify the user's intention on the apparatus disclosed in the Patent Literature 1. Necessarily, such a situation that a display object that is against the user's intention is selected, or that display control that is against the user's intention is performed, or similar situations occur on the apparatus disclosed in the Patent Literature 1. Of course, specification accuracy regarding the content of the gesture is improved, for example, by using laser light that is relatively stable against environment variation, or by adding more cameras. Such measures, however, certainly increase cost, and conflict with spatial restriction in many cases. Such problems can frequently occur, for example, if a vehicle interior space or the like is considered.

Moreover, the Patent Literature 1 also discloses a technical idea in which the user's line of sight is used for the display object selection operation. However, the display objects existing in a direction of the user's line of sight are not always displayed in a display aspect suitable for the selection. On the contrary, if useful information for the user is to be displayed, more display objects tend to be displayed unless at least the user's intention can be clearly specified. Moreover, the display area of an individual display object tends to be small. In such a situation, it is extremely hard to clearly specify the user's selection targets on the basis of the line of sight. Necessarily, such a situation that the display object that is against the user's intention is selected, or that the display control that is against the user's intention, or the like occurs on the apparatus disclosed in the Patent Literature 1.

Moreover, as a different problem from the specification accuracy of the display objects selected by the user, the user's determination intention is also hardly detected from the user's line of sight. For example, if the user gazes at one point, it is apparently reasonable to determine that a process on the gazed display object is desired. In this case, however, the user needs to keep gazing at the one point for a relatively long time, and the user's another operation (e.g. driving a vehicle, etc.) is restricted. Moreover, in the case of simple detection of a determination operation (a determination intention), it is also apparently reasonable to determine that it is only necessary to operate an operation switch or the like, whose installation place is determined. However, the operation of selecting the display objects (i.e. the line of sight, the gesture, and a combination of them) and this type of determination operation have completely different characteristics. Therefore, the user cannot intuitively perform the determination operation, which deteriorates operability. This is radically the same, as disclosed in the Patent Literature 1, for example, even if this type of operation switch is placed near the steering wheel, which is easily operated by the user.

The aforementioned various problems can occur without change even if the technical ideas disclosed in the Patent Literatures 2 and 3 are applied. In other words, conventional apparatuses, including the apparatuses disclosed in the aforementioned Patent Literatures, have such a technical problem that it is hard to accurately select information that meets the user's intention, from among a plurality of display objects.

In view of the technical problems, it is therefore an object of the present invention to provide a display control apparatus that can realize information display that meets the user's intention.

### Solution to Problem

The above object of the present invention can be achieved by a display control apparatus configured to control a display state of a display screen, said display control apparatus is provided with: a detecting device configured to detect a trigger operation of a user and a gaze area of the user on the display screen, on the basis of an imaging result of an imaging device that images the user; a determining device configured to determine specified display objects corresponding to the detected trigger operation or the detected gaze area from among a plurality of display objects displayed on the display screen in a first display state; and a controlling device configured to control the display state to be a second display state in which a display attribute that makes selection by a line of sight easier than in the first display state is given at least to the determined specified display objects if the trigger operation is detected in the first display state.

The above object of the present invention can be achieved by a display control method for controlling a display state of a display screen, said display control method is provided with: a detecting process of detecting a trigger operation of a user and a gaze area of the user on the display screen, on the basis of an imaging result of an imaging device that images the user; a determining process of determining specified display objects corresponding to the detected trigger operation or the detected gaze area from among a plurality of display objects displayed on the display screen in a first display state; and a controlling process of controlling the display state to be a second display state in which a display attribute that makes selection by a line of sight easier than in the first display state is given at least to the determined specified display objects if the trigger operation is detected in the first display state.

The above object of the present invention can be achieved by a computer program for making a computer apparatus function as the display control apparatus according to any one of claims 1 to 10.

The above object of the present invention can be achieved by a recording medium on which the computer program according to claim 12 is recorded.

### Brief Description of Drawings

[FIG. 1] FIG. 1 is a conceptual diagram illustrating an information display system according to an example of the present invention.
[FIG. 2] FIG. 2 is a conceptual diagram illustrating detection of a gaze point in the information display system in FIG. 1.
[FIG. 3] FIG. 3 is a flowchart illustrating information display control performed in the information display system in FIG. 1.
[FIG. 4] FIG. 4A and FIG. 4B are conceptual diagrams illustrating a gesture detection area.
[FIG. 5] FIG. 5A to FIG. 5D are diagrams illustrating a finger detection procedure.
[FIG. 6] FIG. 6 is a conceptual diagram illustrating a normal layout in the information display system in FIG. 1.
[FIG. 7] FIG. 7 is a flowchart illustrating a display screen making process performed in the information display control in FIG. 3.
[FIG. 8] FIG. 8 is a conceptual topside view illustrating a user.
[FIG. 9] FIG. 9A and FIG. 9B are diagrams illustrating display examples of selection target display objects.
[FIG. 10] FIG. 10A and FIG. 10B are conceptual diagrams illustrating operation layouts in the information display system in FIG. 1.
[FIG. 11] FIG. 11 is a conceptual diagram illustrating a display screen when selection of a display object is performed by a line of sight.

### Description of Embodiments

### <Embodiment of Display Control Apparatus>

A display control apparatus according to an embodiment of the present invention is a display control apparatus configured to control a display state of a display screen, said display control apparatus is provided with: a detecting device configured to detect a trigger operation of a user and a gaze area of the user on the display screen, on the basis of an imaging result of an imaging device that images the user; a determining device configured to determine specified display objects corresponding to the detected trigger operation or the detected gaze area from among a plurality of display objects displayed on the display screen in a first display state; and a controlling device configured to control the display state to be a second display state in which a display attribute that makes selection by a line of sight easier than in the first display state is given at least to the determined specified display objects.

According to the display control apparatus in the embodiment of the present invention, the trigger operation and the gaze area of the user are detected on the basis of the imaging result of the imaging device.

The trigger operation is a type of gesture performed by the user, but does not have many patterns associated with many function operations, unlike the disclosure in the prior art. The trigger operation is namely an operation that can give a trigger signal to the display control apparatus. The trigger operation can be accurately and simply detected on the basis of a binary criterion or a relatively simple criterion similar thereto, in many cases.

The gaze area means a point or an area that can be determined to be gazed by the user on the display screen. Here, in order to use the imaging result for the detection of the gaze area, in reality, at least around eyes of the user needs to be imaged. However, as described above, the detection of the trigger operation can be relatively easily performed. Therefore, the trigger operation can be defined as an operation that can be easily detected in an imaging area on the premise that the imaging device is placed at a position suitable for the detection of the gaze area. Thus, in the embodiment of the display control apparatus of the present invention, a plurality of imaging devices are not necessarily provided. In this regard, in comparison with a case where the gesture associated with many function operations needs to be detected, restrictions on apparatus configuration according to the embodiment of the display control apparatus can be significantly eased.

According to the display control apparatus in the embodiment of the present invention, the specified display objects corresponding to the detected trigger operation or the detected gaze area are determined by the determining device, from among the plurality of display objects displayed on the display screen in the first display state. The specified display objects mean one or a plurality of display objects that can be determined to meet the user's intention relatively highly possibly.

In view of the easy detection of the trigger operation as described above, it is apparently hard to imagine that the specified display objects are changed by the trigger operation, or that the display objects that can be the specified display objects are specified from among the plurality of display objects by the trigger operation. However, the definition of the trigger operation does not necessarily correspond to such a practical aspect in a one-to-one manner. More specifically, the definition corresponds to the practical aspects in a one-to-many manner. In other words, there may be a plurality of practical aspects of the trigger operation included in one definition. Therefore, it is not necessarily hard to associate the individual trigger operation with the area on the display screen. If the specified display objects are determined in response to the trigger operation, the trigger operation is preferably associated with the area on the display screen. On the other hand, if the specified display objects are determined in response to the gaze area, the trigger operation may be a single operation.

Here, according to the display control apparatus in the embodiment of the present invention, whether or not to detect the trigger operation is associated with the display state of the display screen. In other words, if the trigger operation is detected when the display state of the display screen corresponds to the first display state in which the plurality of display objects are arranged in accordance with a predetermined standard, the display state is switched to the second display state. The predetermined standard according to the first display state may be of any type, and there is almost no restriction on the practical aspects of the first display state.

The second display state is a display state in which at least the display attribute of the specified display objects described above is different from that in the first display state. Specifically, in the second display state, the display attribute that makes the selection by the line of sight easier than in the first display state is given to the specified display objects. The display attribute means an attribute regarding the display. The expression "that makes the selection by the line of sight easier" apparently does not seem to be strict; however, as long as it is discussed at least in terms of a mutual relation of a plurality of different display states, it is clear which display state is suitable in selecting the display objects by the line of sight, from a general viewpoint. For example, if the display objects have relatively large display area, it can be said that the selection by line of sight is relatively easy. Moreover, for example, if the display objects have relatively high visibility, it can be said that the selection by line of sight is relatively easy. It can be also said that the selection by the line of sight is relatively easier if the display objects are displayed in order, in comparison with a case where in the display objects are displayed in disorder.

The display attribute that makes the selection by the line of sight easier, which is given to the specified display objects, may be given directly by a change in the specified display objects themselves, or may be given indirectly by a change in display objects other than the specified display objects, which can change the display attribute of the specified display objects. The former can include, for example, a measure of changing the display area of the specified display objects, a measure of highlighting the specified display objects, or similar measures. The latter can include, for example, a measure of erasing or deleting the display objects other than the specified display objects from the display screen, a measure of making the display objects other than the specified display objects visually inconspicuous, a measure of newly displaying information related to the specified display objects, or similar measures.

Therefore, in the second display state, the user tends to pay more attention to the specified display objects than the other display objects. The specified display objects are the display objects corresponding to the trigger operation or the gaze area of the user. As a result, in the second display state, the display object that meets the user's intention is easily recognized by the user.

The first display state is a display state with relatively high degree of freedom that can be defined by the second display state. In practice, however, the first display state is configured to provide the user with more information in a range in which the visibility is not hindered, on the premise of a situation in which the user is not interested in a particular display object, or a situation in which the user is about to start to search for a particular display object.

As described above, according to the display control apparatus in the embodiment of the present invention, one of the first display state and the second display state that meets the user's intention is selectively applied. Therefore, the information display that meets the user's intention is realized.

What is important here is the second display state. The specified display objects, which are displayed with higher weighting than those of the other display objects in the second display state, are merely candidates that can be determined to arouse the user's interest. The specified display objects in the second display state, however, are provided with the display attribute indicating that the selection by the line of sight is easier than in the first display state, and can attract higher attention. Thus, the user can search for a desired display object by using the line of sight, easily and accurately, from among the specified display objects that are displayed. If the search for the display object that meets the user's intention is finished, the operation of determining the display object can be replaced by the aforementioned trigger operation.

As described above, the display control apparatus according to the embodiment of the present invention can overcome low search accuracy of the information search by the line of sight by switching the display state of the display screen to the second display state, and can accurately determine display timing and a display period of the display according to the second display state by the trigger operation, which is a gesture whose easiness of the detection is significantly increased. In other words, the display control apparatus according to the embodiment of the present invention has such an important characteristic that there is a good complement relation between the estimation of the user's intention based on the line of sight and the estimation of the user's intention based on the gesture. This characteristic cannot be obtained by a simple combination of the information search by the line of sight and the information search by the gesture. In the embodiment of the display control of the present invention, the control operation of the controlling device is configured to use only advantages of the both cases through finding shortcomings of the both cases.

In one aspect of the display control apparatus according to the embodiment of the present invention, the display control apparatus is further provided with a selecting device configured to select at least one display object from among the specified display objects as a selected display object on the basis of the detected gaze area.

According to this aspect, at least one display object is selected from among the specified display objects as the selected display object on the basis of the gaze area. It is therefore possible to perform the display control that meets the user's intention

In this aspect, said controlling device highlights the selected display object.

If the selected display object is highlighted as described above, the user can visually recognize the display object selected by the user at that time point.

In another aspect of the display control apparatus according to the embodiment of the present invention, the second display state is a display state in which the specified display objects have higher visibility than that in the first display state.

According to this aspect, the specified display objects in the second display state have higher visibility than that in the first display state. In other words, in the second display state, an attribute indicating relatively high visibility is given to the specified display objects, as the display attribute that facilitates the selection by the line of sight. Therefore, easiness or certainty of the information search mainly in the specified display objects (i.e. the search for the desired display object) is preferably ensured.

There are many measures for improving the visibility. For example, enlarging, highlighting, flashing, changing display colors, and the like can be included.

In another aspect of the display control apparatus according to the embodiment of the present invention, the second display state is a display state in which the specified display objects have larger display areas than those in the first display state.

According to this aspect, the specified display objects in the second display state have larger display areas than those in the first display state. In other words, in the second display state, an attribute indicating a relatively large display area is given to the specified display objects, as the display attribute that facilitates the selection by the line of sight. Therefore, the easiness or certainty of the information search mainly in the specified display objects (i.e. the search for the desired display object) is preferably ensured.

In another aspect of the display control apparatus according to the embodiment of the present invention, the second display state is a display state in which the specified display objects are arranged.

According to this aspect, the specified display objects in the second display state are arranged and displayed. In other words, in the second display state, an attribute indicating being arranged and displayed is given to the specified display objects, as the display attribute that facilitates the selection by the line of sight. Therefore, the easiness or certainty of the information search mainly in the specified display objects (i.e. the search for the desired display object) is preferably ensured.

There may be various standards in arranging and displaying the specified display objects. The specified display objects may be arranged linearly, or may be arranged curvedly, or may be arranged in accordance with a positional relation with the user. Moreover, in arranging the specified display objects, the attribute of the display objects other than the specified display objects may be also changed.

In another aspect of the display control apparatus according to the embodiment of the present invention, said controlling device controls the display screen to be in the first display state if the trigger operation is canceled.

According to this aspect, the display state of the display objects is returned to the first display state if the trigger operation is canceled. It is thus possible to effectively control the display state according to the second display state, only for an accurate period. The expression "the trigger operation is canceled" conceptually includes that the trigger operation is not detected.

In another aspect of the display control apparatus according to the embodiment of the present invention, the trigger operation is an operation of bringing a body part of the user into contact with or releasing the body part from a predetermined structure determined to support the detection of the trigger operation.

According to this aspect, the user can perform the trigger operation only by bringing the body part into contact with or releasing the body part from the structure. Therefore, operability improvises.

The structure is an object determined to support the detection of the trigger operation. The trigger operation is a gesture having high detectability as described above. Considering that the trigger operation is detected on the basis of the imaging result, an object that is always stationary or that can be considered to be always stationary with respect to the user for a user's operation period may be set as a reference in order to stably perform the detection all the time. According to this aspect, therefore, the trigger operation can be stably detected.

In this aspect, said display control apparatus can be mounted on a vehicle, the structure can be a steering wheel of the vehicle, and the body part of the user can be fingers of a hand.

On the premise that the display control apparatus according to the embodiment of the present invention is mounted on the vehicle, the steering wheel is preferable as the aforementioned structure. Moreover, the fingers which hold the steering wheel are preferable as the aforementioned body part.

In another aspect of the display control apparatus according to the embodiment of the present invention, the display control apparatus is provided with: said imaging device; and a displaying device having the display screen.

According to this aspect, control signal communication can be optimized between the display control apparatus and/or the imaging device and the displaying device. Thus, the effect of the display control apparatus according to the embodiment of the present invention can be significantly demonstrated.

The expression "comprising or provided with the displaying device" is not limited to such a configuration that the display control apparatus according to the embodiment and the displaying device are integrally configured in hardware, but also in effect includes such a configuration that the display control apparatus according to the embodiment and the displaying device are electrically connected through electrical wiring, wire communication, or the like, to make one system, or similar configurations. In the same manner, the expression "comprising or provided with the imaging device" is not limited to such a configuration that the display control apparatus according to the embodiment and the imaging device are integrally configured in hardware, but also in effect includes such a configuration that the display control apparatus according to the embodiment and the imaging device are electrically connected through electrical wiring, wire communication, or the like, to make one system, or similar configurations.

### <Embodiment of Display Control Method>

A display control method according to an embodiment of the present invention is a display control method for controlling a display state of a display screen, said display control method is provided with: a detecting process of detecting a trigger operation of a user and a gaze area of the user on the display screen, on the basis of an imaging result of an imaging device that images the user; a determining process of determining specified display objects corresponding to the detected trigger operation or the detected gaze area from among a plurality of display objects displayed on the display screen in a first display state; and a controlling process of controlling the display state to be a second display state in which a display attribute that makes selection by a line of sight easier than in the first display state is given at least to the determined specified display objects.

According to the display control method according to the embodiment, as in the display control apparatus according to the embodiment described above, the information display that meets the user's intention is realized by each of the processes that realize the same effects as those of the devices of the display control apparatus according to the embodiment described above.

### <Embodiment of Computer Program>

A computer program according to an embodiment of the present invention makes a computer system function as the embodiment of the display control apparatus of the present invention.

The display control apparatus according to the embodiment of the present invention described above can be relatively easily realized as a computer system reads and executes the computer program from a fixed storage apparatus, which can be attached to or detached from the computer system, such as a universal serial bus (USB) memory or a recording medium for storing the computer program, like a read only memory (ROM), a compact disc read only memory (CD-ROM), a DVD read only memory (DVD-ROM), and a hard disk, or as it executes the computer program after downloading the program to the computer system through a communication device.

In response to various aspects of the display control apparatus according to the embodiment of the present invention, the computer program according to the embodiment of the present invention can also adopt various aspects.

### <Embodiment of Recording Medium>

A recording medium according to an embodiment of the present invention records the embodiment of the computer program of the present invention.

According to the recording medium in the embodiment of the present invention, the display control apparatus according to the embodiment of the present invention described above can be relatively easily realized as the recorded computer program according to the embodiment of the present invention can be read and executed in the computer system by mounting the recording medium in or connecting it to the computer system or by inserting it to a proper reading apparatus provided for or connected to the computer system.

The operation and other advantages of the present invention will become more apparent from the embodiments and an example explained below.

### Example

Hereinafter, with reference to the drawings, an image display apparatus 10 will be explained as a preferred example of the present invention.

### <Configuration of Example>

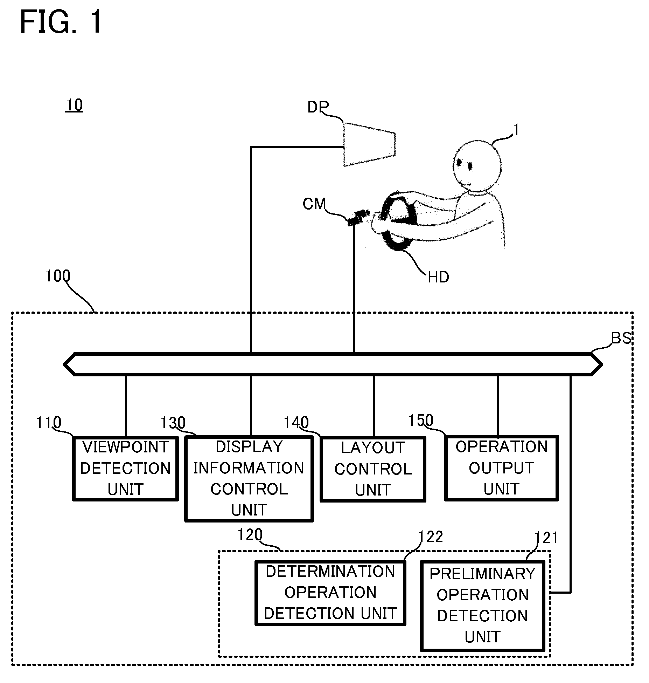

Firstly, with reference to FIG 1, a configuration of the image display apparatus 10 will be explained. FIG. 1 is a conceptual diagram illustrating the information display system 10.

In FIG. 1, the information display system 10 is mounted on a not-illustrated vehicle. The information display system 10 is an apparatus used by a user 1, who is a driver of the vehicle, and includes a display control apparatus 100, a display DP, and a photographing unit CM. In the information display system 10, the elements are electrically connected via a control bus BS. The information display system 10 is one application example of the display control apparatus according to the present invention, and is configured as a part of a not-illustrated car navigation system. Therefore, the information display system 10 can provide a user 1 with various information, such as vehicle position information, map information, surrounding facility information, and road information. The application of the display control apparatus according to the present invention is not limited to the car navigation field.

The display control apparatus 100 is a computer apparatus provided with a central processing unit (CPU), a read only memory (ROM), a random access memory (RAM), and the like. The ROM of the display control apparatus 100 stores therein a control program regarding various controls performed by the display control apparatus 100. The control program also includes a control program regarding information display control described later.

The control program regarding the information display control is one example of the "computer program" according to the present invention. Moreover, the ROM is one example of the "recording medium" according to the present invention. Since the ROM is a nonvolatile storage apparatus, the control program regarding the information display control is provided in advance for the control apparatus 100 in the example. The control program may be written on the RAM, a hard disk, or another volatile control apparatus that can be provided for the control apparatus 100. In this case, update and maintenance of the control program or the like can be relatively easily performed. It is also possible to take such a measure as distributing the control program on a network or distributing a recording medium on which the control program is recorded.

The display DP is an information display apparatus, which is fixed in a state of being hanged down on a ceiling between a windshield and a vehicle driver's seat and which is one example of the "displaying device" according to the present invention. The display DP has a display screen (whose reference numeral is omitted) used for visual recognition by the user 1. In the example, the display DP and the display control apparatus 100 are configured as different bodies. This is one example of the forms that can be adopted by the display control apparatus according to the present invention. For example, the display control apparatus 100 and the display DP can be also integrally configured.

The photographing unit CM is a digital camera, which is one example of the "imaging device" of the present invention, fixed in a meter food which is positioned on the rear side of a steering wheel HD so as to image the user 1. A control unit configured to control the digital camera is accommodated in the inside of the camera. The photographing unit CM is a stereo camera, which is provided with a visible light cutting filter and which allows infrared photography. The photographing unit CM is configured to perform both of the infrared photography, which is performed while irradiating infrared ray in a direction of a photographic subject (or the user 1 here), and normal photography in which the infrared ray is not irradiated.

The display control apparatus 100 is provided with a viewpoint detection unit 110, an operation detection unit 120, a display information control unit 130, a layout control unit 140, and an operation detection unit 150, which function by performing the control program.

The viewpoint detection unit 110 is configured to detect a position at which the user 1 gazes (hereinafter referred to as a "gaze point" as occasion demands) on the display screen (whose numeral reference is omitted) of the display DP, from photographed images of the photographing unit CM (or one example of the "imaging result" according to the present invention). The photographing detection unit 110 can detect the gaze point of the user 1 as position coordinates on the display screen.

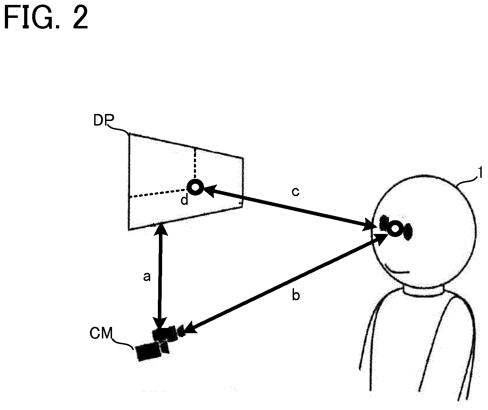

Now, with reference to FIG. 2, the detection of the gaze point of the user 1 by the viewpoint detection unit 110 will be explained. FIG. 2 is a conceptual diagram illustrating the detection of the gaze point. In FIG. 2, the same points will carry the same reference numerals as those in FIG. 1, and an explanation thereof will be omitted as occasion demands.

In FIG. 2, a positional relation between the display DP and the photographing unit CM is known in advance (refer to an illustrated arrow a). On the other hand, a direction of the line of sight of the user 1 can be detected on the basis of the photographed images obtained by the photographing unit CM (refer to an illustrated arrow c). In the same manner, an eyeball position of the user 1 with respect to the photographing unit CM can be detected (refer to an illustrated arrow b). The position coordinates of a gaze point d of the user 1 are obtained from information by a known geometrical method, as an intersection of the line of sight of the user 1 and the display screen of the display DP.

The operation detection unit 120 is configured to detect an operation of the user 1, and includes a preliminary operation detection unit 121 and a determination operation detection unit 122.

The preliminary operation detection unit 121 is configured to detect a preliminary operation of the user 1. In the example, the preliminary operation is defined as a pointing operation performed on the steering wheel HD (or a gesture of placing one finger on the steering wheel HD). The preliminary operation is one example of the "trigger operation" according to the present invention. A specific detection aspect of the preliminary operation by the preliminary operation detection unit 121 will be detailed later.

The determination operation detection unit 122 is configured to detect a determination operation of the user 1.. In the example, the determination operation is defined as a tapping operation performed with one finger on the steering wheel HD. The detection of the determination operation is one example of the "detection of canceling the trigger operation" according to the present invention. A specific detection aspect of the determination operation by the determination operation detection unit 122 will be detailed later.

The display information control unit 130 is configured to determine various information that is to be displayed at that time point, as a car navigation system, on the basis of positioning information obtained from map information, a global positioning system (GPS), or the like, and is configured to display it on the display screen via the control of the display DP.

The layout control unit 140 is configured to accurately control a screen configuration of the display screen including a display state of the information to be displayed, which is determined by the display information control unit 130, according to the circumstances at that time. The "circumstances at that time" in the example are respective detection results of the viewpoint detection unit 110 and the operation detection unit 120. Information to be laid out by the layout control unit 140 includes operation target display objects that are selected and determined by the operation of the driver 1. The operation target display objects are one example of the "plurality of display objects" according to the present invention.

The operation output unit 150 is configured to determine the display objects on which a selection operation is performed by the user 1, from a display screen layout and a position on the display screen at which the determination operation is detected, when the determination operation of the user 1 is detected by the determination operation detection unit 122. The operation output unit 150 is also configured to output information regarding the determined display objects to the user 1.

### <Operation of Example>

Next, as the operation of the example, the operation of the information display system 10 will be explained.

### <Details of Information Display Control>

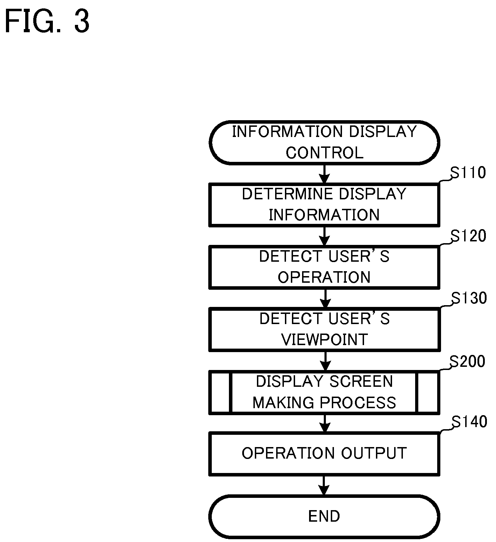

Firstly, with reference to FIG. 3, the details of the information display control will be explained. FIG. 3 is a flowchart illustrating the information display control.

In FIG. 3, if the information display control is started, display information to be displayed on the display screen of the display DP is determined (step S110).

Here, the display information is determined on the basis of map information, facility information, road information, destination information set in advance, set route information, position information, and the like. For example, a present position and a moving direction are obtained on the basis of a GPS signal or the like. The present position and the moving direction are displayed as position information on a map, from map information, which is separately obtained. On the other hand, if a near-future travel route is predicted on the basis of the set route information and if some search condition is set at that time point, information regarding a facility or the like that satisfies the search condition in the near-future travel route is displayed. For example, if a "restaurant" is set as the search condition, information regarding the restaurant on the travel route of the vehicle is searched for from the facility information, and is displayed on the display screen in a form of being superimposed on the map information.

In the example, the display screen of the display DP is configured to be controlled; however, the display screen may be also a display screen, such as, for example, a head mounted display (HMD). Moreover, in the example, information is configured to be superimposed on the map information (which may be a three-dimensional image or a two-dimensional image); however, the facility information or the like may be attached to a video of the external world, which actually spreads ahead of the vehicle, thereby realizing a type of augmented reality (AR).

Then, the user's operation is detected by the operation detection unit 120 (step S120). In the example, a gesture of a hand (or one example of the "body part" according to the present invention) of the user 1 is detected as the user's operation.

Now, a detailed method of detecting the gesture will be explained.

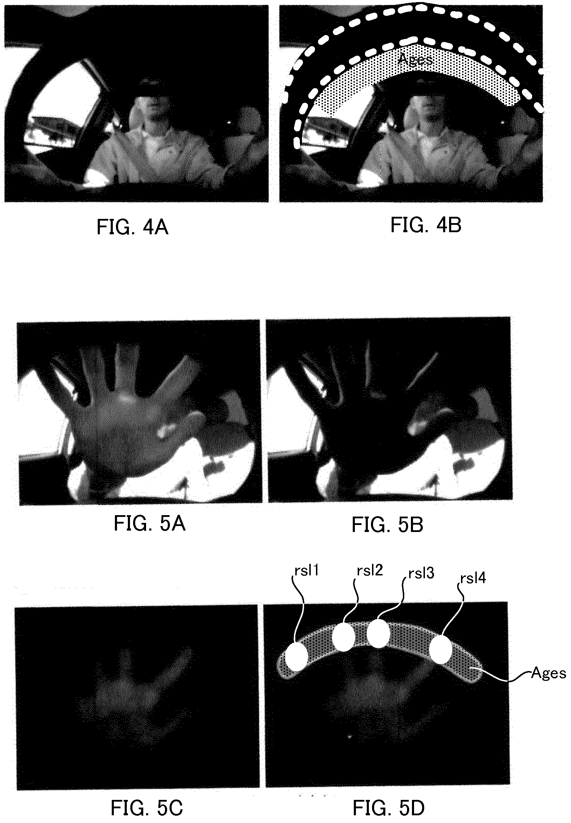

Firstly, with reference to FIG. 4A and FIG. 4B, a gesture detection area will be explained. FIG. 4A and FIG. 4B are conceptual diagrams illustrating the gesture detection area.

FIG. 4A exemplifies one photographed image of the user 1 in the photographing unit CM. Since the photographing unit CM is a stereo camera, there are a plurality of photographed images of the photographing unit CM (or images corresponding to FIG. 4A). From the plurality of photographed images, an area of the steering wheel HD (hereinafter referred to as a "steering wheel area" as occasion demands) is specified.

More specifically, an installation position and a photographing direction of the photographing unit CM with respect to the steering wheel HD are fixed in advance. The steering wheel HD is expected to look oval in a photographed image, and to look ark-shaped in an upper half of the photographed image. Moreover, the steering wheel HD is relatively dark and uniform. Since the prior prediction is established, the steering wheel area can be specified in the photographed image. According to the stereo camera, the steering wheel area can be more accurately detected; however, it is also sufficiently possible to specify the steering wheel area from a photographed image of a monaural camera on the basis of known image recognition processing and pattern recognition processing.

FIG. 4B illustrates that the steering wheel area is specified. FIG. 4B illustrates an outline of the steering wheel by a white dashed line. In other words, the inside of the dashed frame is the steering wheel area. Here, a gesture detection area Ages is set along the specified steering wheel area (refer to an illustrated hatched area). Specifically, the gesture detection area Ages is set in the inside of the steering wheel area, and a width thereof (or an open angle with respect to the photographing unit CM) is set on both sides on the basis of a top portion of the steering wheel HD in the photographed image. For example, the width is set at about 20 degrees on the both sides on the basis of the top portion.

A positional relation between the steering wheel HD and the photographing unit CM is semipermanently fixed. The gesture detection area Ages can be therefore permanently used if the gesture detection area Ages is set once in an environment condition with good exposure to sunlight in which the steering wheel HD and the other part tend to have high contrast. If, however, the user changes a physical position of the steering wheel or in similar cases, the gesture detection area Ages is reset, as occasion demands.

Back in FIG. 3, when the gesture is detected, a stereo parallax at an arbitrary position in the steering wheel area is obtained in advance after the aforementioned steering wheel area is specified. The stereo parallax is obtained if there is a stationary object that crosses the steering wheel area spending a predetermined period or more, or if there is an object that crosses the steering wheel area in one direction. In other words, the stationary object and the object are most likely the hand that is in contact with the steering wheel HD (wherein the former case corresponds to a state in which the user 1 holds the steering wheel HD, and the latter case corresponds to a state in which the user 1 steers the steering wheel HD), and the stereo parallax can be thus obtained. The stereo parallax is obtained at a plurality of positions of the steering wheel HD. On the basis of the stereo parallax, it is possible to determine whether or not fingers detected near the steering wheel HD are in contact with the steering wheel HD. The steering wheel HD is one example of the "structure" according to the present invention.

In the detection of the user's operation in the step S120, firstly, the fingers near the steering wheel HD are detected.

The detection of the fingers is performed by comparing the photographed images, both when the infrared ray is irradiated and when the infrared ray is not irradiated. The comparison is performed on both the stereo-photographed left and right photographed images. The comparison allows the photographic subject that is close to the photographing unit CM to be detected. If the photographic subject that is close to the photographing unit CM is detected, the photographic subject that crosses the gesture detection area Ages described above is further detected, and it is determined to be the finger(s) of the user 1.

If the photographic subject that crosses the steering wheel HD is too wide or too large to be the fingers(s) or if the photographic subject is beyond the steering wheel area, it is not determined to be the finger(s) in order to ensure the accuracy of determining whether or not to be the finger(s), regardless of a state of the photographic subject. The position of the finger(s) determined is specified as one-dimensional position information along the direction crossing the gesture detection area Ages.

This situation is illustrated in FIG. 5A to FIG. 5D. FIG. 5A to FIG. 5D are diagrams illustrating the finger detection procedure. In FIG. 5A to FIG. 5D, the same points will carry the same reference numerals as those in FIG. 4A and FIG. 4B, and an explanation thereof will be omitted as occasion demands.

FIG. 5A illustrates an example of an infrared photographed image, and FIG. 5B illustrates an example of a non-infrared photographed image. If the infrared photography is performed in this manner, there arises a difference in brightness of the object that is close to the steering wheel HD. Therefore, only the object that is close to the steering wheel appears in the difference. This is illustrated in FIG. 5C. The object that is close to the steering wheel is on the rear side of the steering wheel area (i.e. on the user 1 side), and the width thereof is reasonable. It is therefore determined to be the finger(s) of the user 1. This is illustrated in FIG. 5D. FIG. 5D illustrates that finger detection results rs1, rs2, rs3, and rs4 are obtained in the gesture detection area Ages.

On the other hand, if the finger(s) is detected in both the left and right stereo-photographed images, the respective fingers on both the images are brought close to each other to obtain a stereo parallax. By comparing the obtained stereo parallax with the stereo parallax obtained in advance, it is determined whether or not the detected finger(s) is in contact with the steering wheel HD. Due to the determination operation, the number and position of the fingers detected near the steering wheel HD, and the state of the contact to the steering wheel HD are obtained. On the operation detection unit 120, the operations associated with the detection and determination described above are repeatedly performed. Then, the operation of the user 1 intentionally placing the finger on the steering wheel HD (or the preliminary operation) and the tapping operation of releasing the finger once from the steering wheel HD and then again bringing it in contact with the steering wheel HD are both detected.

Back in FIG. 3, the gaze point of the user 1 is detected by the viewpoint detection unit 110 (step S130). The gaze point of the user 1 is detected according to the aforementioned concept; however, more specifically, it is detected as follows.

The viewpoint detection unit 110 extracts an eye area of the user 1, from the photographed images of the user 1 obtained from the photographing unit CM. Then, the direction of the line of sight is calculated from a pupil center and a Purkinje image. On the other hand, the photographing unit CM stereo-photographs the eyes of the user 1 in advance, and the viewpoint detection unit 110 calculates a positional relation between the photographing unit CM and the eyes of the user 1 from the stereo-photographed eye images. The position of the display DP with respect to the photographing unit CM is provided as initial information. Thus, the position of an intersection between the line of sight of the user 1 and the display screen is obtained from this information and the position of the eyes. The obtained position is eventually converted to a coordinate point on the display screen, as the position of the gaze point. The gaze point is one example of the "gaze area" according to the present invention.

Then, a display screen making process is performed by the layout control unit 140 (step S200). Here, an explanation will be given to a case where the layout of the display information determined in the step S110 is controlled. According to the present invention, the display screen making process by the layout control unit 140 is one example of the operation of the "controlling device" according to the present invention.

There are broadly two types of layouts of the display information controlled by the layout control unit 140. One is a normal layout, and the other is an operation layout. The former is one example of the "first display state" according to the present invention, and the other is one example of the "second display state" according to the present invention.

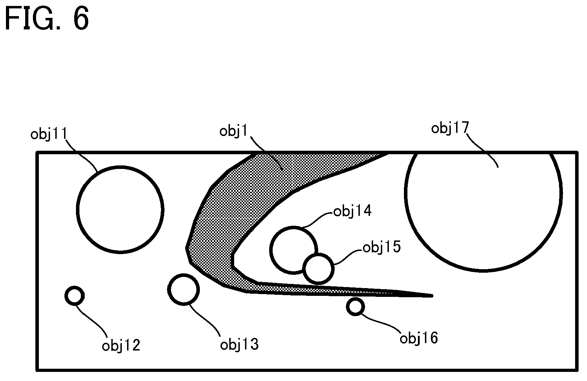

Now, the normal layout will be explained with reference to FIG. 6. FIG. 6 is a conceptual diagram illustrating the normal layout.

FIG. 6 illustrates that the display information determined in the step S110 is displayed according to the normal layout. In other words, in the normal layout, a plurality of display objects in the display screen (or an illustrated rectangular frame) are displayed, not in an arranged list format, but two-dimensionally and discretely on the basis of a positional relation in the external world.

Specifically, a display object ojb1 is a target travel route of the vehicle presented by a car navigation function. Display objects obj11, obj12, obj13, obj14, obj15, obj16, and obj17 are displayed, as information regarding facilities along the target travel route. The reason that the display objects have different display areas is to realize information display based on the positional relation in the external world. In other words, as in the display of the target travel route, the closer the display object (or facility) is to the vehicle at a present time point, the larger the display area s. As described above, in the normal layout, the positional relation between the display objects holds the actual positional relation in the external world. Thus, the user 1 can easily recognize overall information in the normal layout.

On the other hand, in the normal layout, there is no relation between the intention of the user 1 and the display area of the display object. Namely, in FIG. 6, even if the user 1 tries to confirm the detailed content of the display object obj16 located far in the external world, it is not easy to select the display object obj16. At this time, specification of the display object obj16 by a cursor or pointer moving operation is not intuitive and is not easy either. It is also not easy to select the display object obj16 by the gesture, because it is practically hard to detect the gesture that has no restriction provided by the simple image recognition processing. The display screen making process according to the example is to overcome such a problem. In the display screen making process, the operation layout is selected in this situation. In other words, the layout of the display objects is switched from the normal layout to the operation layout.

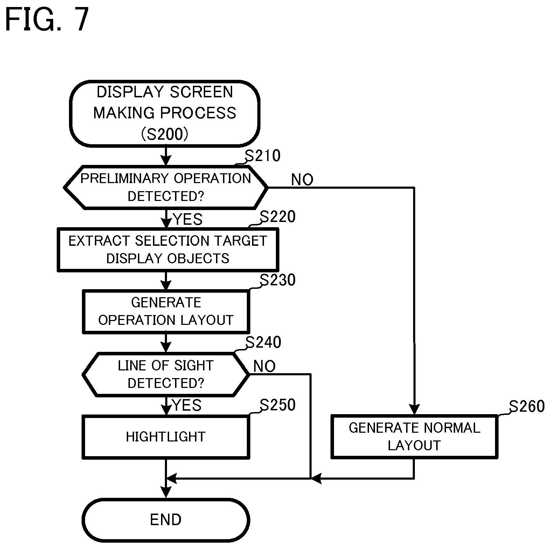

Now, with reference to FIG. 7, the details of the display screen making process will be explained. FIG. 7 is a flowchart illustrating the display screen making process.

In FIG. 7, it is determined whether or not the preliminary operation is detected (step S210). The preliminary operation according to the example is, as described above, the operation of placing one finger on the steering wheel HD. If the preliminary operation is not detected (the step S210: NO), the display objects are displayed in accordance with the normal layout (step S260).

On the other hand, if the preliminary operation is detected (the step S210: YES), selection target display objects are extracted (step S220). The selection target display objects are display objects that are selected from among operation target display objects displayed on the display screen and that can be determined to meet the intention of the user 1. The selection target display objects are one example of the "specified display objects" according to the present invention.

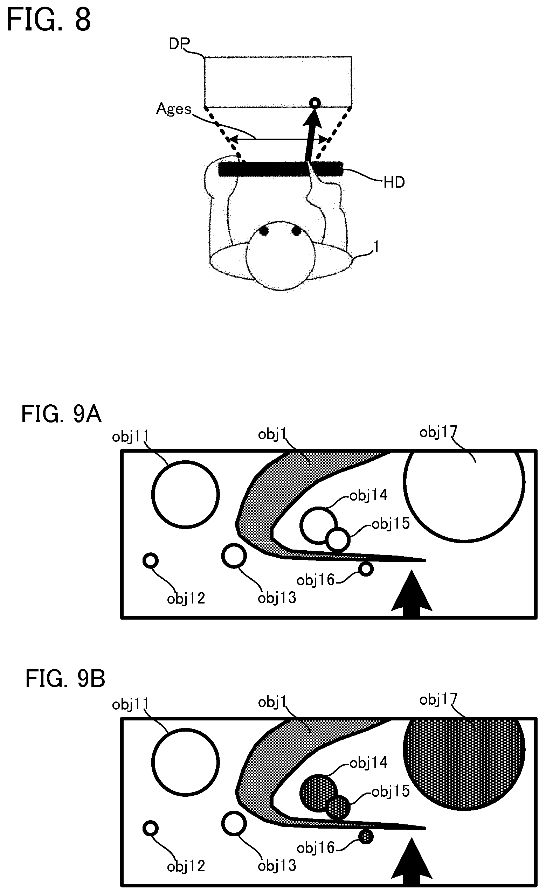

Now, with reference to FIG. 8, FIG. 9A and FIG. 9b, the extraction of the selection target display objects accompanying the detection of the preliminary operation will be explained. FIG. 8 is a conceptual topside view illustrating the user 1. FIG. 9A and FIG. 9B are diagrams illustrating display examples of selection target display objects. In each drawing, the same points will carry the same reference numerals as those in the drawings already described, and an explanation thereof will be omitted as occasion demands.

FIG. 8 illustrates a correspondence relation between position input on the steering wheel HD by the preliminary operation and a position on the display screen.

The preliminary operation detected by the preliminary operation detection unit 121 is the operation of placing one finger on the steering wheel HD. The gesture detection area Ages is, as described above, the area set along the steering wheel HD in a lower part of the steering wheel HD. Thus, the preliminary operation is strictly the operation of placing the finger on the steering wheel HD in the lower part of the steering wheel HD.

As described above, the operation detection unit 120 can specify the position of the finger of the user 1, as the one-dimensional position information along the direction crossing the gesture detection area Ages. Thus, the layout control unit 140 associates the gesture detection area Ages with a horizontal axis of the display screen of the display DP in a one-dimensional manner, and converts the position on the gesture detection area Ages at which the preliminary operation is inputted, to the position on the display screen (refer to a open circle illustrated).

Then, on the basis of the position on the display screen corresponding to the preliminary operation, the selection target display objects are extracted from the operation target display objects. This is illustrated in FIG. 9A and FIG. 9B.

In FIG. 9A, the input position of the preliminary operation is displayed with a thick arrow for convenience. The display content of the display screen illustrated is in accordance with the normal layout for convenience.

Here, the layout control unit 140 extracts several display object that are close to the input position corresponding to the preliminary operation, as the selection target display objects, if the operation target display objects are displayed in accordance with the normal layout. This is illustrated in FIG. 9B. FIG. 9B illustrates the display objects obj14, obj15, obj16, and obj17 are extracted.

Back in FIG. 7, if the selection target display objects are extracted, control information for displaying the display objects in accordance with the operation layout is generated, and the display objects are displayed in accordance with the operation layout (step S230). The operation layout is the same as the normal layout in that the display objects are displayed on the basis of the actual positional relation. The operation layout, however, supports an action of selecting one display object from among the selection target display objects by using the line of sight (i.e. according to the concept of the present invention, the operation layout facilitates the selection by the line of sight). Thus, the operation layout has higher visibility of the extracted selection target display objects than the normal layout. Although there are many measures for improving the visibility, a measure of enlarging the display area will be explained here.

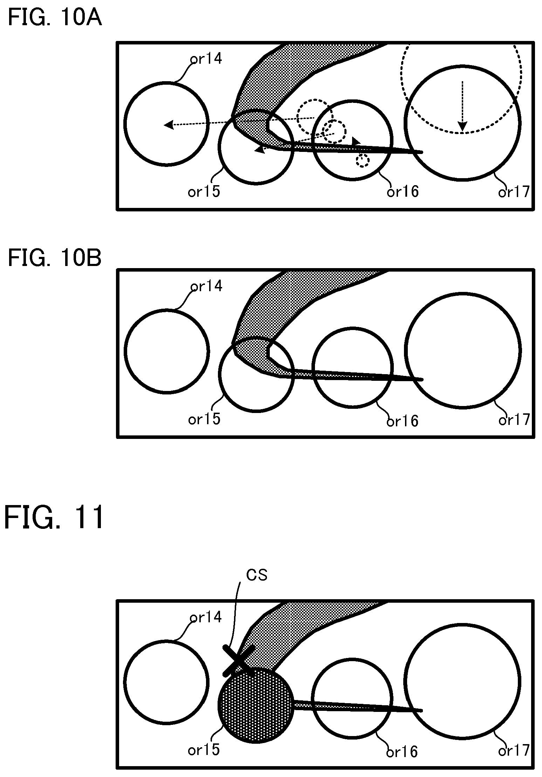

The operation layout will be explained with reference to FIG. 10A and FIG. 10B. FIG. 10A and FIG. 10B are conceptual diagrams illustrating the operation layouts. In FIG. 10A and FIG. 10B, the same points will carry the same reference numerals as those in FIG. 9A and FIG. 9B, and an explanation thereof will be omitted as occasion demands.

FIG. 10A illustrates the enlargement of the selection target display objects. In FIG. 10A, the display objects obj14, obj15, obj16, and obj17 (whose reference numerals are omitted) are enlarged with the actual positional relation held, and are respectively changed to selection target display objects or14, or15, or16, and or17. In FIG. 10A, the operation target display objects other than the selection target display objects are temporarily erased from the display screen.

As a result, the display screen on which the display state of the display objects is actually controlled in accordance with the operation layout is as illustrated in FIG. 10B. Namely, the display screen on which the selection target display objects are displayed in accordance with the operation layout is a screen suitable for the input by the line of sight of the user 1. To put it differently, in the operation layout, a display attribute indicating the selection by the line of sight is easier than in the normal layout is given to the selection target display objects. Specifically, the display attribute is provided by a direct change indicating the enlargement of the selection target display objects and an indirect change indicating the erasure of the display objects other than the selection target display objects.

The operation layout according to FIG. 10B is one example of each of the "second display state in which the specified display objects have higher visibility than that in the first display state" and the "second display state in which the specified display objects have larger display areas than those in the first display state" according to the present invention.

There are various aspects according to the measure for improving the visibility of the selection target display objects in the operation layout. For example, there may be taken such measures as setting the number of the selection target display objects to be less than or equal to a predetermined value, setting predetermined magnitude of the selection target display objects, setting a predetermined display interval of the selection target display objects, and arranging the selection target display objects while maintaining the original positional relation as long as possible. Moreover, considering that the layout changes in a binary manner between the normal layout and the operation layout, an animation process or similar processes aiming at a reduction in discomfort or the like may be performed in this transition period or in a case where the selection target display objects change due to the change in the input position of the preliminary operation, or in similar cases.

Back in FIG. 7, if the selection target display objects are displayed in accordance with the operation layout, it is determined whether or not the line of sight of the user 1 is detected (step S240). The line of sight of the user 1 means the gaze point detected by the viewpoint detection unit 110. If the line of sight is not detected (the step S240: NO), the display screen making process is ended.

On the other hand, if the line of sight is detected (the step S240: YES), the layout control unit 140 selects one display object from among the selection target display objects on the basis of the already obtained position coordinates of the gaze point on the display screen, and highlights the selected display object (step S250). The highlighting can include flashing, coloring, changing display colors, and the like. Moreover, the layout control unit 140 draws a line-of-sight cursor CS on the display screen, together with the highlighting of the selected display object. The line-of-sight cursor CS is a cursor indicating the position of the gaze point of the user 1 detected by the viewpoint detection unit 110.

Now, with reference to FIG. 11, the selection of the display object by the line of sight will be explained. FIG. 11 is a conceptual diagram illustrating the display screen when the selection of the display object is performed by the line of sight.. In FIG. 11, the same points will carry the same reference numerals as those in FIG. 10A and FIG. 10B, and an explanation thereof will be omitted as occasion demands.

In FIG. 11, the line-of-sight cursor CS, i.e. the gaze point of the user 1, is as illustrated. From among the selection target display objects enlarged in accordance with the operation layout, the display object that is closest to the line-of-sight cursor CS is the selection target display object or15. Therefore, the selection target display object or15 is highlighted (or hatched in FIG. 11) as a selected display object. Moreover, detailed information regarding the selection target display object that is selected at that time point is displayed on the display screen.

The line-of-sight cursor CS is not always required; however, the display of the line-of-sight cursor CS allows the user 1 to visually recognize how much change in the line of sight is required to select an adjacent display object. Thus, operability further increases.

Back in FIG. 7, if the highlighting is ended, the display screen making process is ended. The display screen making process is performed in the above manner.

Back in FIG. 3, if the display screen making process is ended, the process is returned to the information display control, which is a main routine, and operation output is performed (step S140). Specifically, if the determination operation of the user 1 is detected by the determination operation detection unit 122, it is determined that the detected determination operation (i.e. the tapping operation of releasing the finger from the steering wheel HD and then again bringing it in contact with the steering wheel HD) is an operation of canceling the preliminary operation. Due to the cancellation of the preliminary operation, the layout of the display screen is returned to the normal layout again. If the determination operation is associated with some action, the action may be also performed together with the cancellation of the preliminary operation. For example, data output or the like may be performed. If the operation output is performed, the information display control is ended. The information display control is a process repeatedly performed with a predetermined period. Therefore, the process is repeated from the step S110 again. The information display control is performed in the above manner.

As described above, according to the information display control in the example, due to such a simple trigger operation as placing the finger on the steering wheel HD or releasing the finger from the steering wheel HD, the layout of the display objects can be switched, and the information selection operation by the line of sight of the user 1 can be performed on the operation layout suitable for the information selection operation. It is therefore possible to perform the information display according to the operation layout in accurate timing that meets the user's intention and for an accurate period, thereby realizing the intuitive, accurate, and simple information selection by the line of sight.

In other words, the information display control according to the example is provided through finding the following two points: (1) it is practically hard to accurately detect the user's complicated gesture and use it for the information display control; and (2) the layout of the display objects suitable for the information selection by the user's line of sight is different from the layout of the display objects suitable for information provision for the user. The information display control according to the example arrives at such a technical idea that the display state of the display objects is switched between the operation layout suitable for the information selection and the normal layout suitable for the information provision by using the simple gesture such as the preliminary operation and the determination operation as the trigger operation. In other words, it arrives at such a technical idea that shortcomings of the information input by the line of sight and shortcomings of the information input by the gesture are complemented by each other. On the basis of such technical ideas, it is possible to realize the accurate information display that meets the user's intention.

In the example, the selection target display objects are extracted on the basis of the position on the gesture detection area Ages at which the preliminary operation is inputted and which is converted to the position on the display screen. However, considering that the selection target display objects are merely selection targets, i.e. candidates, the position coordinates of the gaze point of the user 1 detected by the viewpoint detection unit 110 can be also used for the extraction of the selection target display objects. Moreover, the position coordinates of the gaze point and the position coordinates by the preliminary operation according to the example can be also taken into consideration and can be used together for the extraction of the selection target display objects.

The present invention is not limited to the aforementioned embodiments and examples, but various changes may be made, if desired, without departing from the essence or spirit of the invention which can be read from the claims and the entire specification. A display control apparatus which involves such changes is also intended to be within the technical scope of the present invention.

### Description of Reference Numerals

- 1: user
- 10: information display system
- 100: display control apparatus
- CM: photographing unit
- DP: display
- HD: steering wheel
- 110: viewpoint detection unit
- 120: operation detection unit
- 121: preliminary operation detection unit
- 122: determination operation detection unit
- 130: display information control u it
- 140: layout control unit
- 150: operation output unit

## Claims

1. A display control apparatus configured to control a display state of a display screen, said display control apparatus comprising:
a detecting device configured to detect a trigger operation of a user and a gaze area of the user on the display screen, on the basis of an imaging result of an imaging device that images the user;
a determining device configured to determine specified display objects corresponding to the detected trigger operation or the detected gaze area from among a plurality of display objects displayed on the display screen in a first display state; and
a controlling device configured to control the display state to be a second display state in which a display attribute that makes selection by a line of sight easier than in the first display state is given at least to the determined specified display objects if the trigger operation is detected in the first display state.

2. The display control apparatus according to claim 1, further comprising a selecting device configured to select at least one display object from among the specified display objects as a selected display object on the basis of the detected gaze area.

3. The display control apparatus according to claim 2, wherein said controlling device highlights the selected display object.

4. The display control apparatus according to claim 1, wherein the second display state is a display state in which the specified display objects have higher visibility than that in the first display state.

5. The display control apparatus according to claim 1, wherein the second display state is a display state in which the specified display objects have larger display areas than those in the first display state.

6. The display control apparatus according to claim 1, wherein the second display state is a display state in which the specified display objects are arranged.

7. The display control apparatus according to claim 1, wherein said controlling device controls the display screen to be in the first display state if the trigger operation is canceled.

8. The display control apparatus according to claim 1, wherein the trigger operation is an operation of bringing a body part of the user into contact with or releasing the body part from a predetermined structure determined to support the detection of the trigger operation.

9. The display control apparatus according to claim 8, wherein
said display control apparatus is mounted on a vehicle,
the structure is a steering wheel of the vehicle, and
the body part of the user is fingers of a hand.

10. The display control apparatus according to claim 1, comprising: said imaging device; and a displaying device having the display screen.

11. A display control method for controlling a display state of a display screen, said display control method comprising:
a detecting process of detecting a trigger operation of a user and a gaze area of the user on the display screen, on the basis of an imaging result of an imaging device that images the user;
a determining process of determining specified display objects corresponding to the detected trigger operation or the detected gaze area from among a plurality of display objects displayed on the display screen in a first display state; and
a controlling process of controlling the display state to be a second display state in which a display attribute that makes selection by a line of sight easier than in the first display state is given at least to the determined specified display objects if the trigger operation is detected in the first display sate.

12. A computer program for making a computer apparatus function as the display control apparatus according to any one of claims 1 to 10.

13. A recording medium on which the computer program according to claim 12 is recorded.
